Europäisches Patentamt

European Patent Office

Office européen des brevets

(11) Veröffentlichungsnummer: **0 336 295**

**A1**

(12) # EUROPÄISCHE PATENTANMELDUNG

(21) Anmeldenummer: 89105606.1

(22) Anmeldetag: 30.03.89

(51) Int. Cl.4: **H02G 5/04 , H01R 25/14**

(30) Priorität: 06.04.88 DE 3811456

(43) Veröffentlichungstag der Anmeldung:
11.10.89 Patentblatt 89/41

(84) Benannte Vertragsstaaten:
**AT BE CH DE ES FR GB GR IT LI LU NL SE**

(71) Anmelder: **Rittal-Werk Rudolf Loh GmbH & Co. KG**
**Auf dem Stützelberg**
**D-6348 Herborn(DE)**

(72) Erfinder: **Wagener, Hans**
**Rittershäuser Strasse 14**
**D-6344 Dietzhölztal-Rittershausen(DE)**

(74) Vertreter: **Vogel, Georg**
**Pat.-Ing. Georg Vogel**
**Hermann-Essig-Strasse 35**
**D-7141 Schwieberdingen(DE)**

(54) Halter mit Strom-Sammelschienen für ein Sammelschienensystem.

(57) Die Erfindung betrifft einen Halter mit Strom-Sammelschienen für ein Sammelschienensystem zum Anschluß elektrischer Geräte, der aus einem Isolierträger mit in seine Oberseite eingebrachten Aufnahmen für mehrere, in gleichmäßigen Abständen parallel zueinander darin festgelegte Strom-Sammelschienen-Abschnitte besteht. Damit auch im Bereich des Halters, der sich über die gesamte Länge der Strom-Sammelschienen-Abschnitte erstrecken kann, elektrische Geräte elektrisch und mechanisch angeschlossen werden können, sieht die Erfindung vor, daß der rechteckförmig und plattenförmig ausgebildete Isolierträger mit seinen Längsseiten in die Längsrichtung der Strom-Sammelschienen-Abschnitte ausgerichtet ist, daß zum elektrischen Anschluß der Geräte die Strom-Sammelschienen-Abschnitte einen senkrecht an der Oberseite des Isolierträgers abstehenden Anschlußschenkel für Aufsteckkontakte der Geräte aufweisen, und daß zum mechanischen Festlegen der Geräte der Isolierträger entlang seiner Längsseiten mit Haltemitteln für Halteelemente der Geräte versehen ist.

FIG.1

EP 0 336 295 A1

Xerox Copy Centre

## Halter mit Strom-Sammelschienen für ein Sammelschienensystem

Die Erfindung betrifft einen Halter mit Strom-Sammelschienen für ein Sammelschienensystem zum Anschluß elektrischer Geräte, der aus einem Isolierträger mit in seine Oberseite eingebrachten Aufnahmen für mehrere, in gleichmäßigen Abständen parallel zueinander darin festgelegte Strom-Sammelschienen-Abschnitte besteht.

Ein Halter dieser Art ist durch die DE-PS 31 43 518 bekannt. Der Isolierträger ist dabei als schmales, quaderförmiges Befestigungsteil ausgebildet, das sich quer zu den Strom-Sammelschienen-Abschnitten erstreckt und diese im Abstand zur Befestigungsfläche festlegt. Die Strom-Sammelschienen-Abschnitte werden in ihrer Längsrichtung an mehreren, im Abstand zueinander stehenden Stellen mittels derartiger Halter auf der Befestigungsfläche festgelegt. Elektrische Geräte können daher nur in den Bereichen zwischen den Haltern, aber nicht im Bereich derselben, mit den Strom-Sammelschienen-Abschnitten verbunden werden, da die Strom-Sammelschienen-Abschnitte mittels Abdeckteilen in den Aufnahmen der Isolierträger gehalten sind. Außerdem sind die Strom-Sammelschienen-Abschnitte zwischen den Haltern nicht zur Befestigungsfläche hin isoliert und geschützt abgedeckt.

Es ist Aufgabe der Efindung, einen Halter der eingangs erwähnten Art zu schaffen, der auch im Bereich des Isolierträgers die Verbindung von elektrischen Geräten mit den Strom-Sammelschienen-Abschnitten zuläßt und diese zur Befestigungsfläche hin isoliert und abdeckt.

Diese Aufgabe wird nach der Erfindung dadurch gelöst, daß der rechteckförmig und plattenförmig ausgebildete Isolierträger mit seinen Längsseiten in die Längsrichtung der Strom-Sammelschienen-Abschnitte ausgerichtet ist, daß zum elektrischen Anschluß der Geräte die Strom-Sammelschienen-Abschnitte einen senkrecht an der Oberseite des Isolierträgers abstehenden Anschlußschenkel für Aufsteckkontakte der Geräte aufweisen, und daß zum mechanischen Festlegen der Geräte der Isolierträger entlang seiner Längsseiten mit Haltemitteln für Halteelemente der Geräte versehen ist.

Bei dieser Ausgestaltung kann sich der Isolierträger über die gesamte Länge der Strom-Sammelschienen-Abschnitte erstrecken, ohne das Anbringen der Geräte an beliebiger Stelle zu beeinträchtigen. Die Strom-Sammelschienen-Abschnitte lassen sich daher auch voll zur Befestigungsfläche hin isolieren und abdecken, so daß dadurch die Gefahr eines unbeabsichtigten Kurzschlusses wesentlich reduziert ist.

Die Festlegung der Strom-Sammelschienen-Abschnitte am Isolierträger ist nach einer Ausgestaltung so ausgeführt, daß die Strom-Sammelschienen-Abschnitte jeweils zwischen zwei Haltestegen gehalten sind, die an der Oberseite des Isolierträgers angeformt sind und die Strom-Sammelschienen-Abschnitte bis auf die Anschlußschenkel umschließen.

Der Halt kann dadurch noch verbessert werden, daß die Haltestege eine hinterschnittene Aufnahme aufweisen, in die parallel zur Oberseite des Isolierträgers ausgerichtete Querschenkel der Strom-Sammelschienen-Abschnitte eingeführt sind. Die Strom-Sammelschienen-Abschnitte können dann senkrecht zur Oberseite des Isolierträgers nicht mehr abgezogen werden.

Die Kurzschlußsicherheit des Halters wird nach einer weiteren Ausgestaltung dadurch noch erhöht, daß in der Mitte zwischen den Strom-Sammelschienen-Abschnitten an der Oberseite des Isolierträgers Trennstege angeformt sind, die parallel zu den Anschlußschenkeln der Strom-Sammelschienen-Abschnitte stehen und mit diesen bündig abschließen, sowie daß im Bereich der Längsseiten der Isolierträger mit angeformten Abschlußstegen versehen ist, die an der Oberseite des Isolierträgers senkrecht abstehen und sich bis in den Bereich der freien Enden der Anschlußschenkel der Strom-Sammelschienen-Abschnitte und der Trennstege erstrecken.

Nach einer weiteren Ausgestaltung ist vorgesehen, daß der Isolierträger in ein rinnenartiges Aufnahmeteil eingesetzt ist, dessen Seitenwände die Abschlußstege an den Außenseiten und Stirnseiten umschließen und die mit den Stirnseiten der Abschlußstege verbunden, vorzugsweise verschraubt sind. Dann läßt sich das Aufsetzen der Geräte auf den Halter dadurch noch erleichtern und verbessern, daß die Haltemittel als Rastaufnahmen und die Halteelemente als Rastansätze von Rastverbindungen ausgebildet sind, daß die Rastaufnahmen durch nutförmige Abwinkelungen der Seitenwände des Aufnahmeteils gebildet sind, die auf den einander und dem Gerät zugekehrten Innenseiten offen sind, und daß die Rastansätze an dem Gehäuse der Geräte angeformt sind. Das Gerät braucht nur auf den Halter aufgesteckt zu werden. Dabei werden die Aufsteckkontakte der Geräte den elektrischen Anschluß des Gerätes und die Rastverbindungen die mechanische Festlegung des Gerätes am Halter übernehmen. Die Geräte lassen sich durch einfaches Abziehen auch wieder leicht vom Halter lösen.

Die für die Rastverbindungen erforderliche Elastizität der Haltemittel wird einfach dadurch erreicht, daß das Aufnahmeteil aus elastischem Material besteht.

Bestehen das Gerätegehäuse und die Rastansätze desselben aus elektrisch leitendem Material, dann läßt sich das auf den Halter aufgesteckte Gerät dadurch auf einfache Weise mit dem Nullpotential bzw. Erde verbinden, daß das Aufnahmeteil aus elektrisch leitendem Material besteht, da die Befestigungsfläche, z.B. eine Schaltschrankwand, dieses Potential führt.

Ein Sammelschienensystem läßt sich mit derartigen Haltern dadurch auf einfache Weise erweitern, daß die Strom-Sammelschienen-Abschnitte bündig mit den Schmalseiten des Isolierträgers abschließen und daß bei der Aneinanderreihung von Haltern die Strom-Sammelschienen-Abschnitte im Bereich der Stoßstelle der Isolierträger mittels elektrisch leitender Verbinder durchschaltbar sind. Der Platz für die Verbinder läßt sich einfach dadurch schaffen, daß die Haltestege für die Strom-Sammelschienen-Abschnitte mit ihren Stirnseiten im Abstand zu den Schmalseiten des Isolierträgers enden.

Die Erfindung wird anhand eines Ausführungsbeispiels näher erläutert. Es zeigt:

Fig. 1 eine Teildraufsicht auf den Halter mit Strom-Sammelschienen im Bereich einer Schmalseite und

Fig. 2 einen Querschnitt durch den Halter entlang der Linie II-II nach Fig. 1.

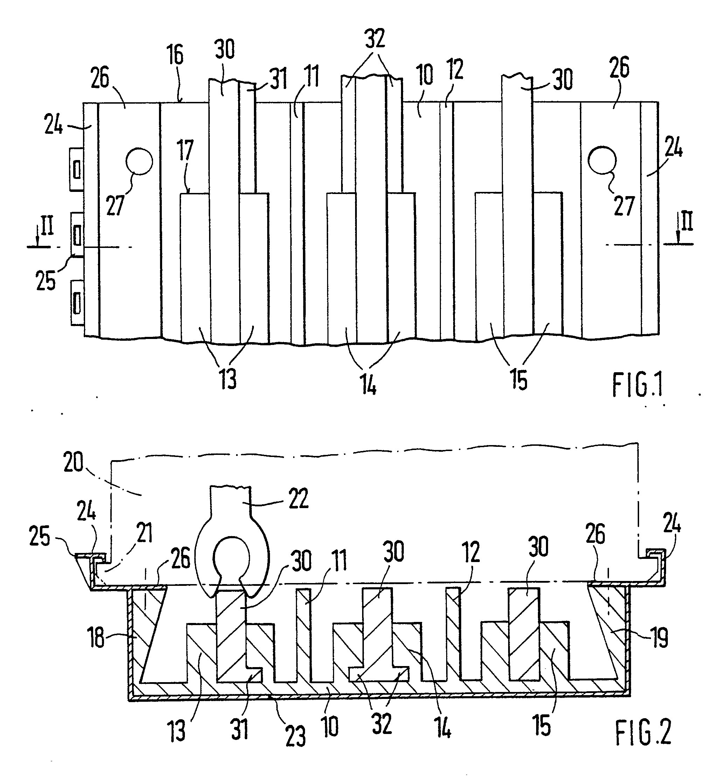

Bei dem Ausführungsbeispiel ist der Isolierträger 10 aus elektrisch nicht leitendem Material rechteckförmig und plattenförmig ausgebildet. Die Schmalseiten 16 des Isolierträgers 10 erstrecken sich quer zu der Längsrichtung der Strom-Sammelschienen-Abschnitte 30. Die Längsseiten des Isolierträgers 10 erstrecken sich praktisch über die gesamte Länge der Strom-Sammelschienen-Abschnitte 30. Die Aufnahmen für die Strom-Sammelschienen-Abschnitte 30 werden jeweils durch zwei Haltestege 13,14 oder 15 gebildet, die an der Oberseite des Isolierträgers 10 senkrecht abstehend angeformt sind und die Strom-Sammelschienen-Abschnitte 30 bis auf einen als Anschlußschenkel dienenden Teil umschließen, wie der Schnitt nach Fig. 2 zeigt. Dabei kann der im Querschnitt rechteckförmige Strom-Sammelschienen-Abschnitt 30 nur zwischen den beiden Haltestegen 15 festgeklemmt sein. Die beiden Haltestege 13 oder 14 können aber auch eine hinterschnittene Aufnahme für einen Querschenkel 31 oder 32 des Strom-Sammelschienen-Abschnittes 30 aufweisen, um den Strom-Sammelschienen-Abschnitt 30 senkrecht zur Oberseite des Isolierträgers 10 nicht abziehbar festzulegen.

An den Haltestegen 13, 14 und 15 stehen die Anschlußschenkel der Strom-Sammelschienen-Abschnitte 30 vor, so daß Aufsteckkontakte 22 elektrischer Geräte 20 aufgesteckt werden können, um elektrische Verbindungen zwischen dem Gerät 20 und den Strom-Sammelschienen-Abschnitten 30 allein durch Aufstecken des Gerätes 20 herstellen zu können.

Zwischen benachbarten Strom-Sammelschienen-Abschnitten 30 sind an der Oberseite des Isolierträgers 10 die Trennstege 11 und 12 angeformt, die parallel zu den Anschlußschenkeln der Strom-Sammelschienen-Abschnitte 30 ausgerichtet sind und mit den freien Enden der Anschlußschenkel bündig abschließen. Dabei sind die Trennstege 11 und 12 in der Mitte der einander benachbarten Stromsammelschienen-Abschnitte 30 angeordnet. Damit wird die Kurzschlußsicherheit im Bereich des Halters erhöht. Demselben Zweck dienen auch die Abschlußstege 18 und 19, die im Bereich der Längsseiten des Isolierträgers 10 senkrecht abstehend angeformt sind. Der Isolierträger 10 besteht aus einem Material, das nach dem Gesichtspunkt einer hohen Isolation ausgewählt wird. Dieses Material ist meist nicht elastisch. Daher ist der Isolierträger 10 in das rinnenförmige Aufnahmeteil 23 eingesetzt, wobei die Flansche 26 auch noch die Stirnseiten der Abschlußstege 18 und 19 umschließen. Wie die Bohrungen 27 zeigen, können die Flansche 26 mit den Abschlußstegen 18 und 19 verschraubt werden. Die Befestigungsschrauben können gleichzeitig auch den Halter auf der Befestigungsfläche festlegen.

An den einander abgekehrten Seiten der Geräte 20 sind als Rastansätze ausgebildete Haltemittel 21 angeformt. Das Aufnahmeteil 23 geht im Bereich der Längsseiten in als nutförmige Rastaufnahmen ausgebildete Haltemittel 24 über. Diese Rastaufnahmen sind auf den einander zugekehrten Seiten, die auch den Seiten des Gerätes 20 mit den Rastansätzen zugekehrt sind, offen. Die Rastansätze des Gerätes 20 lassen sich durch Auslenkung der Haltemittel 24 rastend mit dem Aufnahmeteil 23 und damit dem Halter verbinden. Die mechanische Festlegung des Gerätes 20 am Halter erfolgt daher durch einfaches Aufrasten. Das Gerät 20 kann an beliebiger Stelle des Halters mit den Strom-Sammelschienen-Abschnitten 30 verbunden werden, wobei die Aufsteckkontakte 22 mit den Anschlußschenkeln der Strom-Sammelschienen-Abschnitte die elektrische Verbindung herstellen und die Rastverbindungen zwischen den Haltemitteln 24 und den Halteelementen 21 die mechanische Festlegung des Gerätes 20 am Halter übernehmen.

Diese mechanischen Rastverbindungen und diese elektrischen Steckverbindungen lassen auch ein ebenso schnelles und leichtes Lösen des Gerätes von dem Halter zu. An dem Aufnahmeteil 23 können im Bereich zumindest einer Rastaufnahme Befestigungsösen 25 oder dgl. angeformt sein, die z.B. zum Festlegen von Anschluß- und/oder Verbindungsleitungen ausgenützt werden können.

## Ansprüche

1. Halter mit Strom-Sammelschienen für ein Sammelschienensystem zum Anschluß elektrischer Geräte, der aus einem Isolierträger mit in seine Oberseite eingebrachten Aufnahmen für mehrere, in gleichmäßigen Abständen parallel zueinander darin festgelegte Strom-Sammelschienen-Abschnitte besteht,
dadurch gekennzeichnet,
daß der rechteckförmig und plattenförmig ausgebildete Isolierträger (10) mit seinen Längsseiten in die Längsrichtung der Strom-Sammelschienen-Abschnitte (30) ausgerichtet ist,
daß zum elektrischen Anschluß der Geräte (20) die Strom-Sammelschienen-Abschnitte (20) einen senkrecht an der Oberseite des Isolierträgers (10) abstehenden Anschlußschenkel für Aufsteckkontakte (22) der Geräte (20) aufweisen, und
daß zum mechanischen Festlegen der Geräte (20) der Isolierträger (10) entlang seiner Längsseiten mit Haltemitteln (24) für Halteelemente (21) der Geräte (20) versehen ist.

2. Halter nach Anspruch 1,
dadurch gekennzeichnet,
daß die Strom-Sammelschienen-Abschnitte (30) jeweils zwischen zwei Haltestegen (13,14 oder 15) gehalten sind, die an der Oberseite des Isolierträgers (10) angeformt sind und die Strom-Sammelschienen-Abschnitte (30) bis auf die Anschlußschenkel umschließen.

3. Halter nach Anspruch 1 oder 2,
dadurch gekennzeichnet,
daß die Haltestege (13,14) eine hinterschnittene Aufnahme aufweisen, in die parallel zur Oberseite des Isolierträgers (10) ausgerichtete Querschenkel (31,32) der Strom-Sammelschienen-Abschnitte (30) eingeführt sind.

4. Halter nach einem der Ansprüche 1 bis 3,
dadurch gekennzeichnet,
daß in der Mitte zwischen den Strom-Sammelschienen-Abschnitten (30) an der Oberseite des Isolierträgers (10) Trennstege (11,12) angeformt sind, die parallel zu den Anschlußschenkeln der Strom-Sammelschienen-Abschnitte (30) stehen und mit diesen bündig abschließen.

5. Halter nach einem der Ansprüche 1 bis 4,
dadurch gekennzeichnet,
daß im Bereich der Längsseiten der Isolierträger (10) mit angeformten Abschlußstegen (18,19) versehen ist, die an der Oberseite des Isolierträgers (10) senkrecht abstehen und sich bis in den Bereich der freien Enden der Anschlußschenkel der Strom-Sammelschienen-Abschnitte (30) und der Trennstege (11,12) erstrecken.

6. Halter nach einem der Ansprüche 1 bis 5,
dadurch gekennzeichnet,
daß der Isolierträger (10) in ein rinnenartiges Aufnahmeteil (23) eingesetzt ist, dessen Seitenwände die Abschlußstege (18,19) an den Außenseiten und Stirnseiten umschließen und die mit den Stirnseiten der Abschlußstege (18,19) verbunden, vorzugsweise verschraubt sind.

7. Halter nach einem der Ansprüche 1 bis 6,
dadurch gekennzeichnet,
daß die Haltemittel (24) als Rastaufnahmen und die Halteelemente (21) als Rastansätze von Rastverbindungen ausgebildet sind,
daß die Rastaufnahmen durch nutförmige Abwinkelungen der Seitenwände des Aufnahmeteils (23) gebildet sind, die auf den einander und dem Gerät (20) zugekehrten Innenseiten offen sind, und
daß die Rastansätze an dem Gehäuse der Geräte (20) angeformt sind.

8. Halter nach Anspruch 6 oder 7,
dadurch gekennzeichnet,
daß das Aufnahmeteil (23) aus elastischem Material besteht.

9 .Halter nach einem der Ansprüche 6 bis 8,
dadurch gekennzeichnet,
daß das Aufnahmeteil (23) aus elektrisch leitendem Material besteht.

10. Halter nach einem der Ansprüche 1 bis 9,
dadurch gekennzeichnet,
daß die Strom-Sammelschienen-Abschnitte (30) bündig mit den Schmalseiten des Isolierträgers (10) abschließen und
daß bei der Aneinanderreihung von Haltern die Strom-Sammelschienen-Abschnitte (30) im Bereich der Stoßstelle der Isolierträger (10) mittels elektrisch leitender Verbinder durchschaltbar sind.

11. Halter nach Anspruch 10,
dadurch gekennzeichnet,
daß die Haltestege (13,14,15) für die Strom-Sammelschienen-Abschnitte (30) mit ihren Stirnseiten (17) im Abstand zu den Schmalseiten (16) des Isolierträgers (10) enden.

FIG.1

FIG.2

7062

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4 ) |
|---|---|---|---|
| X | US-A-3439309 (W.GIGER ET AL) <br> * Spalte 3, Zeile 43 – Spalte 4, Zeile 4; Figuren 1, 3 * <br> --- | 1, 4, 5, 10 | H02G5/04 <br> H01R25/14 |
| P,A | FR-A-2607976 (REGIE NATIONALE DES USINES RENAULT) <br> * Seite 2, Zeile 12 – Zeile 24; Figur 1 * <br> --- | 1-4, 10 | |
| A | GB-A-695922 (METROPOLITAN-VICKERS ELECTRICAL CO) <br> * Seite 1, Zeile 98 – Seite 2, Zeile 32; Figuren 1-4 * <br> ----- | 1 | |

RECHERCHIERTE SACHGEBIETE (Int. Cl.4 )

H02G
H01R
H02B
B60M

Der vorliegende Recherchenbericht wurde für alle Patentansprüche erstellt

| Recherchenort | Abschlußdatum der Recherche | Prüfer |
|---|---|---|
| DEN HAAG | 10 JULI 1989 | WOODALL C.G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
·········································································································
& : Mitglied der gleichen Patentfamilie, übereinstimmendes Dokument

EPO FORM 1503 03.82 (P0403)